# EUROPÄISCHE PATENTSCHRIFT

(11) **EP 2 532 546 B1**
(45) Veröffentlichungstag und Bekanntmachung des Hinweises auf die Patenterteilung: **18.06.2014**
(21) Anmeldenummer: 12170837.4
(22) Anmeldetag: 05.06.2012
(51) Int. Cl.: B60K 1/00, F16H 57/02

(54) **Kraftfahrzeug-Antriebsstrang**
Motor vehicle power train
Chaîne de transmission d'un véhicule automobile

(30) Priorität: 10.06.2011 DE 102011104279
(43) Veröffentlichungstag der Anmeldung: 12.12.2012
(73) Patentinhaber: GETRAG Getriebe- und Zahnradfabrik Hermann Hagenmeyer GmbH & Cie KG, 74199 Untergruppenbach (DE)
(72) Erfinder: Bausch, Jochen, 74321 Bietigheim (DE); Rühle, Günter, 74369 Löchgau (DE); Blessing, Uli Christian, 74078 Heilbronn (DE)
(74) Vertreter: Witte, Weller & Partner Patentanwälte mbB

(56) Entgegenhaltungen:
- EP-A2- 1 298 353
- CN-A- 101 704 340
- CN-A- 101 850 719
- FR-A1- 2 928 583
- US-A- 2 203 292

## Beschreibung

Die vorliegende Erfindung betrifft einen Antriebsstrang für ein Kraftfahrzeug, mit einer elektrischen Maschine zur Bereitstellung von Antriebsleistung, mit einer Getriebeanordnung, die eine Getriebeeingangswelle und eine erste und eine zweite Gangstufe aufweist, wobei die Getriebeeingangswelle mit der elektrischen Maschine verbunden ist, und mit einem Differential, das mit einem Ausgang des Getriebes verbunden und dazu eingerichtet ist, Antriebsleistung auf zwei Antriebswellen zu verteilen.

Ein derartiger Kraftfahrzeug-Antriebsstrang ist bekannt aus den Dokument FR 2928583 oder CN 101 704 340.

Aus Dokument DE 199 17 724, ist es bekannt, einen Antriebsstrang für ein Elektrofahrzeug bereitzustellen, wobei der Antriebsstrang ein lastschaltbares 2-Gang-Getriebe aufweist. Dabei ist eine elektrische Maschine über einen Konstanten-Radsatz mit einer Getriebeeingangswelle verbunden, an der zwei Losräder drehbar gelagert sind. Die Losräder sind mittels lastschaltfähiger Reibkupplungen mit der Getriebeeingangswelle verbindbar. Ferner ist das Differential mit zwei Triebrädern verbunden, die direkt mit den Losrädern in Eingriff stehen. Auf diese Weise kann ein kompakter Antriebsstrang für ein elektrisch angetriebenes Kraftfahrzeug bereitgestellt werden. Durch die zwei Gangstufen kann eine Spreizung erzielt werden, die sowohl einen Betrieb im Stadtverkehr wie auch im Überlandverkehr energieeffizient ermöglicht.

Nachteilig ist bei diesem Antriebsstrang die Verwendung von zwei relativ großen Zahnkränzen (Triebrädern) am Differential, und zwar hinsichtlich Gewicht, Massenträgheit und Herstellungskosten.

Vor diesem Hintergrund ist es eine Aufgabe der Erfindung, einen verbesserten Antriebsstrang für ein Kraftfahrzeug, insbesondere ein rein elektrisch angetriebenes Kraftfahrzeug, bereitzustellen, der hinsichtlich Gewicht und Wirkungsgrad vorteilhaft ist.

Diese Aufgabe wird bei dem eingangs genannten Antriebsstrang gemäß einem ersten Aspekt der vorliegenden Erfindung dadurch gelöst, dass das Differential mit einem schräg verzahnten Triebrad verbunden ist, das mit einem schräg verzahnten Ritzel des Getriebeausgangs in Eingriff steht, wobei eine Druckkammanordnung durch die Schrägverzahnung entstehende Axialkräfte aufnimmt.

Bei dieser Ausführungsform ist es bevorzugt, wenn das Differential nur über ein Triebrad mit dem Ausgang des Getriebes verbunden ist. Hierdurch kann der Antriebsstrang mit geringerem Gewicht und geringeren Herstellungskosten sowie einer geringeren Massenträgheit am Differential bereitgestellt werden. Auch Bauraum kann hierdurch eingespart werden. Das Triebrad und das Ritzel sind vorzugsweise als Stirnräder ausgebildet. Hierdurch kann eine Anordnung geschaffen werden, bei der die elektrische Maschine parallel zu den Antriebswellen ausgerichtet ist.

Die Antriebswellen sind dabei vorzugsweise Antriebswellen für angetriebene Räder des Kraftfahrzeuges. In diesem Fall sind die Wellen des Antriebsstranges vorzugsweise quer zu einer Längsachse des Kraftfahrzeuges ausgerichtet. Es ist jedoch auch denkbar, dass das Differential Antriebsleistung auf zwei Antriebswellen verteilt, die die Antriebsleistung auf eine Vorderachse und eine Hinterachse des Fahrzeuges verteilt.

Bevorzugt ist es jedoch, wenn der Antriebsstrang entweder vorne im Kraftfahrzeug zum Antrieb der Vorderachse oder hinten im Kraftfahrzeug zum Antrieb der Hinterachse eingebaut ist.

Durch die Druckkammanordnung können die durch die Schrägverzahnungen entstehenden Axialkräfte direkt im Radsatz aufgenommen werden. Die Axialkräfte werden folglich nicht an Wälzlager weitergeleitet, mit denen eine Welle des Ritzels und/oder das Differential drehbar gelagert sind. Hierdurch kann auf teure Wälzlageranordnungen verzichtet werden, insbesondere zur Lagerung der Welle des Ritzels.

Das Differential ist dabei vorzugsweise nur mit dem einen Triebrad (Zahnkranz) verbunden. Demzufolge ergibt sich die Möglichkeit der Anbindung unterschiedlicher Zahnkränze, so dass das Differential als "Carry-over"-Differential ausgebildet werden kann. Insbesondere ist die Anbindung unterschiedlicher Differentiale möglich, wie beispielsweise ein Standarddifferential, ein Sportdifferential, ein ansteuerbares Sperrdifferential oder ein Active-Yaw-Differential mit zwei Reibkupplungen.

Die Verwendung von Druckkämmen ist in anderen Anwendungsbereichen bereits bekannt. Bevorzugt wird die Druckkammanordnung ausgeführt, wie es in dem Dokument DE 103 29 870 B3 beschrieben ist. Deren Offenbarungsgehalt soll daher vorliegend durch Bezugnahme vollständig enthalten sein.

Durch die Verwendung nur eines Triebrades, das mit dem Differential verbunden ist, kann zudem axialer Bauraum eingespart werden.

Die Aufgabe wird somit vollkommen gelöst.

Von besonderem Vorzug ist es, wenn das Ritzel an einer Zwischenwelle festgelegt ist, die parallel zu der Getriebeeingangswelle gelagert ist.

Bei dieser Ausführungsform wird folglich eine Zwischenwelle bereitgestellt. Hierdurch kann die Größe des durch die Getriebeanordnung fließenden Drehmomentes gering gehalten werden, so dass die zugeordneten Getriebekomponenten entsprechend klein dimensioniert werden können. Erst in der letzten Stufe (von der Zwischenwelle auf das Differential) wird das Drehmoment auf das erforderliche Niveau gewandelt. Um die bei einer Schrägverzahnung entstehenden Axialkräfte bei diesen hohen Drehmomenten aufnehmen zu können, hat sich die Druckkammanordnung als besonders vorteilhaft erwiesen, um auf aufwändige Lager verzichten zu können.

Die zwei Gangstufen sind dabei vorzugsweise zwischen der Getriebeeingangswelle und der Zwischenwelle eingerichtet. In diesen Gangstufen ist dann das Drehzahlniveau zwar gegebenenfalls höher als im Stand der Technik, die zu übertragenden Drehmomente sind jedoch niedriger, so dass die zwei Gangstufen mit kleineren Bauelementen realisiert werden können, insbesondere in axialer Richtung schmaler ausgeführt werden können. Generell ist es möglich, dass das Ritzel an der Zwischenwelle seitlich neben zwei Zahnrädern der zwei Gangstufen angeordnet ist. In diesem Fall kann auch ein koaxialer Antrieb realisiert werden, beispielsweise durch Anordnen der elektrischen Maschine koaxial zu einer der Antriebswellen.

Von besonderem Vorzug ist es jedoch, wenn das Ritzel in axialer Richtung zwischen einem ersten Zahnrad, das der ersten Gangstufe zugeordnet ist, und einem zweiten Zahnrad angeordnet ist, das der zweiten Gangstufe zugeordnet ist.

Bei dieser Ausführungsform kann ein im Wesentlichen symmetrischer Aufbau realisiert werden. Die zu verwendenden Wälzlager können dadurch ebenfalls kleiner dimensioniert werden.

In einer weiteren insgesamt bevorzugten Ausführungsform sind ein erstes Zahnrad, das der ersten Gangstufe zugeordnet ist, und ein zweites Zahnrad, das der zweiten Gangstufe zugeordnet ist, jeweils als drehbar an einer Zwischenwelle gelagertes Losrad ausgebildet.

Die Zwischenwelle ist dabei vorzugsweise jene, an der auch das Ritzel festgelegt ist.

Bei dieser Ausführungsform kann die Aktuatorik zum Schalten der Gangstufen in dem Bereich der Zwischenwelle angeordnet werden, was zu einer radial kompakten Bauweise beitragen kann. Denn in diesem Fall können im Bereich der Getriebeeingangswelle Zahnräder mit einem relativ kleinen Durchmesser vorgesehen werden.

Dabei ist es von Vorteil, wenn das erste Zahnrad mittels einer ersten Kupplung mit der Zwischenwelle verbindbar ist und wenn das zweite Zahnrad mittels einer zweiten Kupplung mit der Zwischenwelle verbindbar ist.

Die Kupplungen können als Klauenkupplungen oder als synchronisierte Schaltkupplungen ausgebildet sein. Besonders bevorzugt ist es jedoch, wenn diese Kupplungen als Lastschaltkupplungen in Form von Reibkupplungen, insbesondere nasslaufenden Reibkupplungen wie Lamellenkupplungen, ausgebildet sind.

Die Kupplungen können dabei im Bereich zwischen dem ersten Zahnrad und dem zweiten Zahnrad angeordnet werden. Besonders bevorzugt ist es jedoch, wenn zwischen den Zahnrädern das Ritzel festgelegt ist, und wenn die Kupplungen jeweils axial außen in Bezug auf die Zahnräder angeordnet sind. Bei dieser Ausführungsform kann auch die Aktuatorik einfacher in den Antriebsstrang integriert werden.

Ferner ist es insgesamt bevorzugt, wenn das erste Zahnrad mit einem ersten Gegenzahnrad in Eingriff steht, das an der Getriebeeingangswelle gelagert ist, und wenn das zweite Zahnrad mit einem zweiten Gegenzahnrad in Eingriff steht, das an der Getriebeeingangswelle gelagert ist.

Die Gegenzahnräder sind dabei vorzugsweise als Festräder drehfest mit der Getriebeeingangswelle verbunden.

Bei dieser Ausführungsform kann die Getriebeanordnung mit zwei parallelen Wellen, nämlich der Getriebeeingangswelle und der Zwischenwelle, ausgebildet werden. Insgesamt kann somit eine sowohl radial als auch axial kompakte Konstruktion erzielt werden.

Gemäß einer weiteren bevorzugten Ausführungsform, die in Verbindung mit dem Oberbegriff des Anspruchs 1 eine eigene Erfindung gemäß einem zweiten Aspekt darstellt, ist die Getriebeeingangswelle oder eine Maschinenwelle der elektrischen Maschine als Hohlwelle ausgebildet, wobei die andere Welle als Innenwelle ausgebildet ist, die in die Hohlwelle ragt und über einen Verzahnungsabschnitt mit der Hohlwelle verbunden ist.

Hierbei kann zum einen eine leichte Montage des Antriebsstranges realisiert werden. Die Innenwelle kann dabei als Vollwelle oder selber als Hohlwelle ausgebildet sein.

Der Verzahnungsabschnitt, beispielsweise in Form eines Zahnnabenprofils am Innenumfang der Hohlwelle einerseits und am Außenumfang der Innenwelle andererseits, kann gegebenenfalls mit einem Schmiermittel geschmiert werden, wie zum Beispiel Öl.

Von besonderem Vorzug ist es dabei, wenn der Verzahnungsabschnitt von Radiallagern zum drehbaren Lagern der Getriebeeingangswelle und/oder der Maschinenwelle axial beabstandet ist.

Durch diesen Abstand des Verzahnungsabschnittes (zum Beispiel in Form einer Passverzahnung) von der Hauptlagerung der elektrischen Maschine kann eine gewisse Elastizität (Biegeweichheit) der Maschinenwelle der elektrischen Maschine erreicht werden. Dies reduziert bei Positionsfehlern von der elektrischen Maschine zur Getriebeanordnung die Zwangskräfte in dem Verzahnungsabschnitt und erhöht folglich die Lebensdauer des Verzahnungsabschnittes.

Von Vorteil ist es dabei, wenn der Verzahnungsabschnitt in einem axialen Bereich zwischen zwei Zahnrädern angeordnet ist, die an der Welle gelagert sind.

Bei dieser Ausführungsform kann ein relativ großer axialer Abstand von den Radiallagern der Hohlwelle erzielt werden.

Generell kann die axiale Position des Verzahnungsabschnittes frei gewählt werden. Dabei ist es besonders günstig, wenn die freie Länge der Maschinenwelle möglichst lang ist.

Aus Gründen der Steifigkeit kann es sogar bevorzugt sein, wenn der Verzahnungsabschnitt im Bereich radial innerhalb eines Zahnrades angeordnet ist, das an der Welle gelagert ist.

Gemäß einer weiteren, insgesamt bevorzugten Ausführungsform, die in Verbindung mit dem Oberbegriff des Anspruchs 1 eine eigene Erfindung gemäß einem dritten Aspekt darstellt, sind die zwei Gangstufen zwischen der Getriebeeingangswelle und einer Zwischenwelle eingerichtet, an der ein Ritzel des Getriebeausgangs festgelegt ist, wobei zwischen der Zwischenwelle und einem Gehäuse eine Parksperrenanordnung angeordnet ist.

Da die Zwischenwelle über das Ritzel und das Differential mit den Antriebswellen verbunden ist, kann eine Parksperrenanordnung im Bereich der Zwischenwelle angeordnet werden. Ein Anordnen der Parksperrenanordnung an einer der Antriebswellen ist zwar auch möglich. Aufgrund der dort vorherrschenden höheren Drehmomente müsste die Parksperrenanordnung dort jedoch größer dimensioniert werden.

Die Parksperrenanordnung ist dabei vorzugsweise in axialer Richtung benachbart zu einer von zwei Kupplungen angeordnet, die der Zwischenwelle zugeordnet sind.

Ferner ist es insgesamt bevorzugt, wenn die Gangstufen jeweils durch schräg verzahnte Radsätze gebildet sind, wobei die Schrägungsrichtung der Radsätze so gewählt ist, dass die hierdurch entstehenden Axialkräfte entgegengesetzt zu jeweiligen Betätigungsrichtungen von Kupplungen sind, mittels derer die Radsätze zur Leistungsübertragung geschaltet werden können.

Da die durch den Zahneingriff von Triebrad und Ritzel entstehenden Axialkräfte vorzugsweise durch die Druckkammanordnung aufgenommen werden, kann die Schrägungsrichtung der Gangstufen-Radsätze frei gewählt werden. Daher ist es möglich, die Schrägungsrichtung dieser Radsätze so zu wählen, dass eine Kompensation mittels der Betätigungskraft der Kupplungen an den Losrädern erfolgen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Ausführungsform eines erfindungsgemäßen Antriebsstranges;
- Fig. 2: eine schematische Längsschnittansicht durch eine weitere Ausführungsform eines erfindungsgemäßen Antriebsstranges; und
- Fig. 3: eine Längsschnittansicht durch eine weitere Ausführungsform eines erfindungsgemäßen Antriebsstranges.

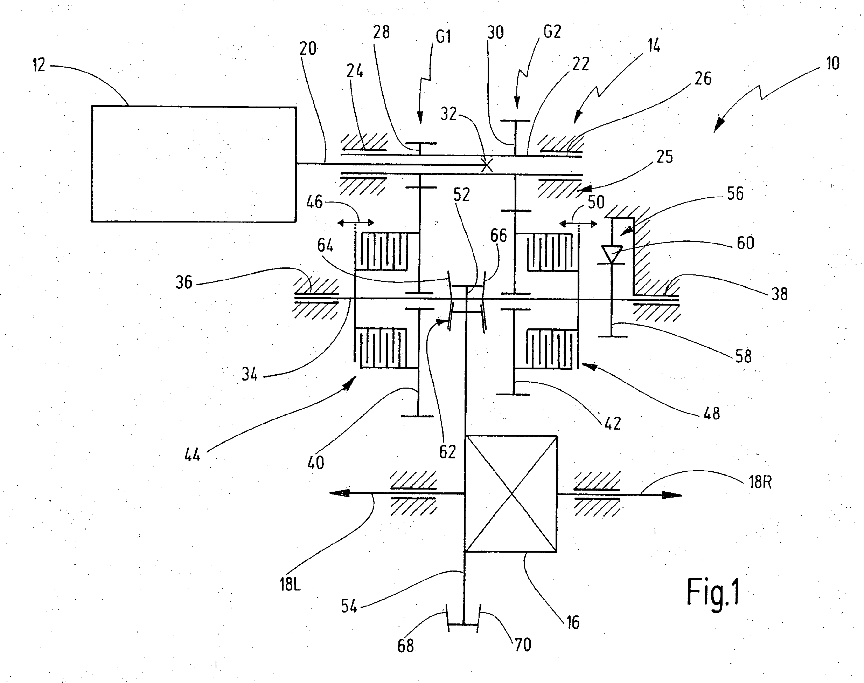

In Fig. 1 ist ein Antriebsstrang für ein Kraftfahrzeug generell mit 10 bezeichnet. Der Antriebsstrang 10 weist eine elektrische Maschine 12 auf, die zur Bereitstellung von Antriebsleistung (im Motorbetrieb) ausgebildet ist.

Ferner beinhaltet der Antriebsstrang 10 eine Getriebeanordnung 14, deren Eingang mit der elektrischen Maschine 12 gekoppelt ist und deren Ausgang mit einem Differential 16 verbunden ist. Das Differential 16 ist dazu ausgelegt, die Antriebsleistung auf eine linke und eine rechte Antriebswelle 18L, 18R zu verteilen. Die Antriebswellen 18L, 18R können mit Rädern einer angetriebenen Achse verbunden sein. Die Antriebswellen 18L, 18R können jedoch auch dazu dienen, die Antriebsleistung auf zwei unterschiedliche Achsen zu verteilen.

Die elektrische Maschine 12 weist eine Maschinenwelle 20 auf. Die Getriebeanordnung 14 weist eine Getriebeeingangswelle 22 auf, die vorzugsweise koaxial zu der Maschinenwelle 20 angeordnet und mit dieser gekoppelt ist.

Die Getriebeeingangswelle 22 ist mittels eines ersten Lagers 24 und mittels eines zweiten Lagers 26 drehbar an einem Gehäuse 25 gelagert.

Die Getriebeeingangswelle 22 ist ferner mit einem ersten Festrad 28 einer ersten Gangstufe G1 und mit einem zweiten Festrad 30 einer zweiten Gangstufe G2 drehfest verbunden.

Die Getriebeeingangswelle 22 ist als Hohlwelle ausgebildet, wobei die Motorwelle 20 in axialer Richtung in die Getriebeeingangswelle 22 eingeführt ist. Die drehfeste Verbindung zwischen der Maschinenwelle 20 und der Getriebeeingangswelle 22 erfolgt über einen Verzahnungsabschnitt 32, der möglichst weit beabstandet ist von einer Lagerung der Maschinenwelle 20 und/oder beabstandet von den Lagern 24, 26 angeordnet ist. Hierdurch ist es möglich, dass die Maschinenwelle 20 eine gewisse Elastizität haben kann. Positionsfehler bei der Montage von elektrischer Maschine 12 und Getriebeanordnung 14 können hierdurch reduziert werden.

Der Verzahnungsabschnitt 32 ist vorzugsweise durch einen Innenverzahnungsabschnitt der Getriebeeingangswelle 22 und einen Außenverzahnungsabschnitt der Maschinenwelle 20 gebildet.

Die Getriebeanordnung 14 beinhaltet ferner eine Zwischenwelle 34, die parallel zu der Getriebeeingangswelle 22 angeordnet ist, nach der Art einer Vorgelegewelle. Die Zwischenwelle 34 ist mittels eines dritten Lagers 36 und mittels eines vierten Lagers 38 drehbar an dem Gehäuse 25 gelagert.

An der Zwischenwelle 34 sind ein erstes Losrad 40 der ersten Gangstufe G1 und ein zweites Losrad 42 der zweiten Gangstufe G2 drehbar gelagert. Das erste Losrad 40 steht mit dem ersten Festrad 28 in Eingriff. Das zweite Losrad 42 steht mit dem zweiten Festrad 30 in Eingriff.

Zwischen dem ersten Losrad 40 und dem dritten Lager 36 ist eine erste Kupplung 44 in Form einer nasslaufenden Lamellenkupplung angeordnet. Die erste Kupplung 44 ist als Lastschaltkupplung ausgebildet und dient dazu, das erste Losrad 40 mit der Zwischenwelle 34 zu verbinden oder von dieser zu trennen. Eine Betätigungsrichtung der ersten Kupplung 44 ist bei 46 dargestellt. Ferner ist an der Zwischenwelle 34 eine zweite Kupplung 48 angeordnet, und zwar in axialer Richtung zwischen dem zweiten Losrad 42 und dem vierten Lager 38. Die zweite Kupplung 48 ist ebenfalls als Lastschaltkupplung ausgebildet, insbesondere in Form einer nasslaufenden Lamellenkupplung. Die Betätigungsrichtung der zweiten Kupplung 48 ist bei 50 dargestellt.

Da die zwei Kupplungen 44, 48 als lastschaltfähige Reibkupplungen ausgebildet sind, können Gangwechsel von der ersten Gangstufe G1 in die zweite Gangstufe G2 ohne Zugkraftunterbrechung durchgeführt werden, wobei die zwei Kupplungen 44, 48 in überschneidender Art und Weise betätigt werden (ähnlich wie bei einem Doppelkupplungsgetriebe).

Zwischen dem ersten Losrad 40 und dem zweiten Losrad 42 ist ein Ritzel 52 drehfest mit der Zwischenwelle 34 verbunden. Alternativ ist es auch möglich, das Ritzel 52 in axialer Richtung versetzt neben den zwei Losrädern 40, 42 anzuordnen. In diesem Fall ist es auch denkbar, die zwei Kupplungen 44, 48 zwischen den zwei Losrädern 40, 42 anzuordnen.

Das Ritzel 52 steht in Eingriff mit einem Triebrad bzw. Zahnkranz 54, der mit einem Eingangsglied des Differentials 16 starr verbunden ist.

Antriebsleistung von der elektrischen Maschine 12 wird folglich bei geschlossener erster Kupplung 44 über die Zahnräder 28, 40 der ersten Gangstufe G1 und das Ritzel 52 auf das Eingangsglied des Differentials 16 übertragen. In der zweiten Gangstufe G2 wird die Antriebsleistung von der elektrischen Maschine über die Zahnräder 30, 42 der zweiten Gangstufe G2 und über das Ritzel 52 auf das Eingangsglied des Differentials 16 übertragen.

Zwischen einer der Kupplungen 44, 48 (vorliegend die Kupplung 48) und einem Abschnitt des Gehäuses 25 ist eine Parksperrenanordnung 56 angeordnet. Die Parksperrenanordnung 56 weist ein Parksperrenrad 58 auf, das drehfest mit der Zwischenwelle 34 verbunden ist. Ferner weist die Parksperrenanordnung 56 eine schematisch angedeutete Parksperrenklinke 60 auf, die in der Regel schwenkbar an dem Gehäuse 25 gelagert ist.

Das Ritzel 52 und das Triebrad 54 sind jeweils schräg verzahnte Zahnräder, insbesondere zum Zwecke einer niedrigen Geräuschentwicklung.

Um zu vermeiden, dass die hierdurch entstehenden Axialkräfte beim Übertragen von Drehmomenten über den Verzahnungseingriff zwischen Ritzel 52 und Triebrad 54 in die Zwischenwelle 34 eingeleitet werden, ist eine Druckkammanordnung 62 vorgesehen.

Die Druckkammanordnung 62 weist einen ersten Druckkamm 64 auf, der auf einer axialen Seite mit dem Ritzel 52 (oder mit der Zwischenwelle 34 benachbart zu dem Ritzel 52) verbunden ist. Bei geeigneter Ausgestaltung kann ein einzelner derartiger Druckkamm 64 hinreichend sein. In der Regel wird der erste Druckkamm 64 hierbei an dem Ritzel 52 auf jener Seite angebracht, in deren Richtung Axialkräfte bei einer Vorwärtsfahrt des Kraftfahrzeuges im Zugbetrieb gerichtet sind. Sofern Axialkräfte auch bei einer Vorwärtsfahrt im Schubbetrieb und/oder bei einer Rückwärtsfahrt (unter Zug) aufgenommen werden sollen, ist an dem Ritzel 52 auch auf der axial gegenüberliegenden Seite ein zweiter Druckkamm 66 angeordnet. Mit zwei Druckkämmen 64, 66 können Axialkräfte in allen Zuständen aufgenommen werden (Vierquadrantenbetrieb).

Bei einer geeigneten Ausgestaltung des ersten Druckkammes 64 und des zweiten Druckkammes 66 können die Axialkräfte direkt eingeleitet werden, insbesondere, wenn die Ausgestaltung der Druckkämme 64, 66 so ist, wie es in dem Dokument DE 103 29 870 B3 beschrieben ist.

Alternativ hierzu ist es auch möglich, an dem Triebrad 54 auf einer axialen Seite eine erste Anlauffläche 68 festzulegen, die die Axialkräfte auf den ersten Druckkamm 64 überträgt (oder umgekehrt). Wie oben erwähnt, überträgt die erste Anlauffläche 68 dabei vorzugsweise Kräfte, die bei einer Vorwärtsfahrt unter Zug (oder Rückwärtsfahrt unter Schub) entstehen. Falls auch Kräfte bei einer Vorwärtsfahrt unter Schub oder bei einer Rückwärtsfahrt unter Zug übernommen werden sollen, ist auch auf der axial gegenüberliegenden Seite an dem Triebrad 54 eine zweite Anlauffläche 70 angeordnet, die die Axialkräfte in den zweiten Druckkamm 66 überleitet.

Es versteht sich, dass die Druckkämme 64, 66 auch an dem Triebrad 54 festgelegt sein können, wobei in diesem Fall vorzugsweise entsprechende erste und zweite Anlaufflächen 68, 70 an dem Ritzel 52 festgelegt sind.

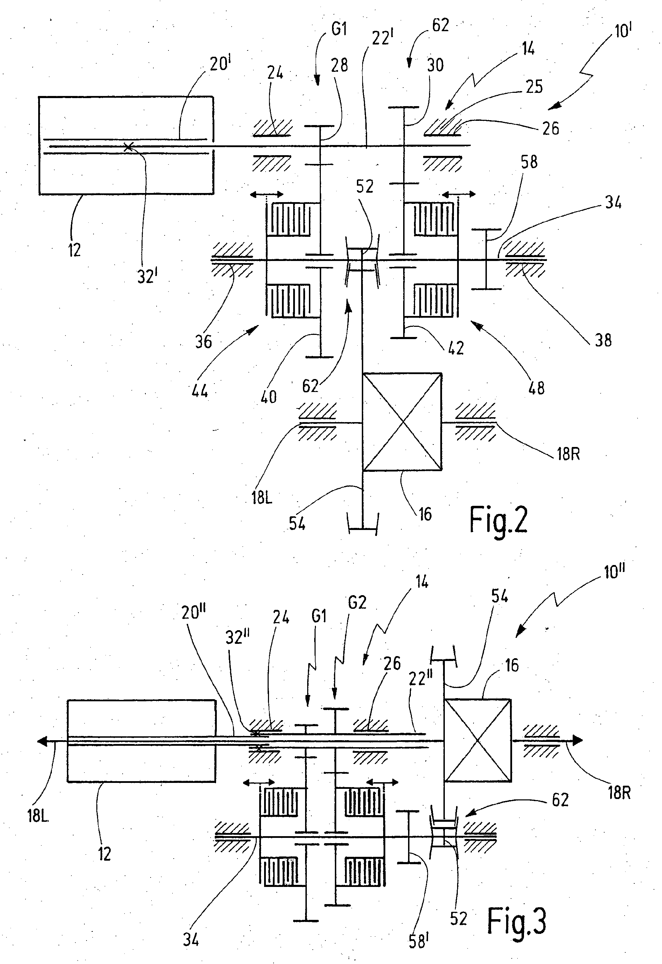

Folgende Modifikationen des obigen Antriebsstranges 10 sind denkbar. Die elektrische Maschine 12 kann auch parallel versetzt zu der Getriebeeingangswelle 22 angeordnet sein. In diesem Fall kann eine Ausgangswelle der elektrischen Maschine 12 über einen Radsatz oder ein sonstiges Getriebe mit einer Maschinenwelle gekoppelt sein, die mit der Getriebeeingangswelle 22 verbunden ist. In diesem Fall kann die elektrische Maschine 12 beispielsweise auch koaxial zu einer der Antriebswellen 18L, 18R angeordnet sein (siehe Fig. 3).

Die Parksperrenanordnung 56 kann auch im Bereich der Antriebswellen 18L, 18R angeordnet sein. In diesem Fall ist die Parksperrenanordnung 56 jedoch massiver zu dimensionieren, da in diesem Bereich höhere Drehmomente anliegen. Im letzteren Fall könnten die Festräder 28, 30 und die Losräder 40, 42 auch vertauscht werden, derart, dass die Losräder 40, 42 mit ihren zugeordneten Kupplungen 44, 48 an der Getriebeeingangswelle 22 angeordnet sind.

Insgesamt wird mit dem Antriebsstrang 10 ein lastschaltbarer Zwei-Gang-Antriebsstrang für Elektrofahrzeuge geschaffen. Generell ist es jedoch auch möglich, die Getriebeeingangswelle 22 zusätzlich mit einem Verbrennungsmotor zu koppeln. In diesem Fall könnte der Antriebsstrang als Hybrid-Antriebsstrang nach der Art eines Range-Extenders ausgeführt werden.

Mit dem Antriebsstrang 10 wird ein sehr guter Wirkungsgrad erzielt. Die in der letzten Übersetzungsstufe (Ritzel 52/Triebrad 54) entstehenden hohen axialen Verzahnungskräfte und die daraus resultierenden Kippmomente müssen nicht von aufwändigen Wälzlagern abgestützt werden. Die Axialkräfte werden vielmehr radintern aufgefangen und werden daher nicht an die Wälzlager zur Abstützung weitergeleitet. Die Parksperrenanordnung 56 wird an der Zwischenwelle 34 im Bereich einer Wand des Gehäuses 25 angeordnet. Die Getriebeeingangswelle 22 wird als Welle mit einem Nabenprofil ausgeführt, um die Schnittstelle zur Drehmomentübergabe von der Maschinenwelle 20 auf die Getriebeeingangswelle 22 möglichst weit entfernt von der Hauptlagerung durch die Lager 24, 26 vorzunehmen. Hierdurch können Zwangskräfte im Nabenprofil infolge von Positionstoleranzen sobald wie möglich reduziert werden.

Da das Differential 16 vorzugsweise nur mit einem Triebrad (Zahnkranz 54) verbunden ist, das ein entsprechend hohes Gewicht haben muss, kann das Gesamtgewicht gegenüber Anordnungen, bei denen das Differential mit zwei Triebrädern verbunden ist, deutlich verringert werden.

Da nur ein Triebrad 54 vorgesehen ist, kann der axiale Bauraum verringert werden. Da die Zwischenwelle 34 immer mit dem Differential 16 mitdreht, kann die Parksperrenanordnung 56 im Bereich der Zwischenwelle 34 angeordnet werden, wo sie kleiner dimensioniert werden kann.

Um das Drehmomentniveau in beiden Gangstufen G1, G2 gering zu halten, wird das Drehmoment überwiegend in der letzten Stufe (Ritzel 52/Triebrad 54) gewandelt. Die beiden Gangstufen G1, G2 werden dann auf der Getriebeeingangswelle 22 bzw. der Zwischenwelle 34 angeordnet. Hierdurch wird in diesem Bereich zwar das Drehzahlniveau angehoben, die Drehmomente für die einzelnen Radsätze 28/40 und 30/42 sind jedoch geringer. Daher können diese Zahnräder schmaler ausgeführt werden.

Die Schrägungsrichtung der Radsätze 28/40 und 30/42 kann so gewählt werden, dass die entstehenden Axialkräfte jeweils durch die Betätigungskräfte der Kupplungen 44, 48 kompensiert werden.

In den Fig. 2 und 3 sind weitere Ausführungsformen von Hybrid-Antriebssträngen 10', 10" gezeigt. Diese entsprechen hinsichtlich Aufbau und Funktionsweise generell dem Antriebsstrang 10 der Fig. 1. Gleiche Elemente sind daher durch gleiche Bezugszeichen gekennzeichnet. Im Folgenden werden im Wesentlichen die Unterschiede erläutert.

Der Antriebsstrang 10' der Fig. 2 unterscheidet sich von jenem der Fig. 1 im Wesentlichen dadurch, dass die Getriebeeingangswelle 22' als Vollwelle ausgebildet ist. Die Maschinenwelle 20' ist als Hohlwelle ausgebildet. Bei der Maschinenwelle 20' kann es sich um eine im Gehäuse der elektrischen Maschine 12 enthaltene Rotorwelle handeln.

Bei der Ausführungsform der Fig. 2 ist die Getriebeeingangswelle 22' in die Maschinenwelle 20' eingesteckt, derart, dass ein Verzahnungsabschnitt 32' beispielsweise innerhalb des Gehäuses der elektrischen Maschine 12 vorgesehen sein kann.

Alternativ ist es natürlich auch möglich, dass sich die Maschinenwelle 20' aus dem Gehäuse der elektrischen Maschine 12 heraus erstreckt und in diesem vorstehenden Abschnitt über einen Verzahnungsabschnitt 32' mit der Getriebeeingangswelle 22' verbunden ist.

Bei dem Antriebsstrang 10" der Fig. 3 ist die Getriebeeingangswelle 22" wiederum als Hohlwelle ausgebildet. Ferner ist auch die Maschinenwelle 20" als Hohlwelle ausgebildet, die sich aus dem Gehäuse der elektrischen Maschine 12 heraus erstreckt und in die Getriebeeingangswelle 22" eingesteckt ist (oder umgekehrt). Ein entsprechender Verzahnungsabschnitt 32" ist schematisch radial innerhalb des ersten Lagers 24 gezeigt, kann jedoch auch in axialer Richtung hinter dem zweiten Lager 26 angeordnet sein. In letzterem Fall ist die freie Länge der Maschinenwelle 20" größer, so dass eine größere Elastizität und eine geringere Empfindlichkeit gegenüber Positionierungsfehlern gegeben ist.

Ferner ist die elektrische Maschine 12 bei dieser Ausführungsform koaxial zu einer der Antriebswellen angeordnet, vorliegend koaxial zur Antriebswelle 18L. Hierbei verläuft die Antriebswelle 18L in axialer Richtung durch die Getriebeeingangswelle 22" hindurch und ferner axial durch die Maschinenwelle 20" hindurch, bis die Antriebswelle 18L auf der dem Differential 16 gegenüberliegenden Seite der elektrischen Maschine 12 heraustritt, um dort mit einem angetriebenen Rad oder dgl. verbunden zu werden.

Bei dieser Ausführungsform ist das Ritzel 52 nicht zwischen den Radsätzen für die Gangstufen G1, G2 angeordnet, sondern in axialer Richtung daneben, so dass die Anbindung an ein Triebrad 54 des Differentials 16 konstruktiv erleichtert ist.

## Patentansprüche

1. Antriebsstrang (10) für ein Kraftfahrzeug, mit
- einer elektrischen Maschine (12) zur Bereitstellung von Antriebsleistung;
- einer Getriebeanordnung (14), die eine Getriebeeingangswelle (22) und eine erste und eine zweite Gangstufe (G1, G2) aufweist, wobei die Getriebeeingangswelle (22) mit der elektrischen Maschine (12) verbunden ist;
- einem Differential (16), das mit einem Ausgang des Getriebes verbunden und dazu eingerichtet ist, Antriebsleistung auf zwei Antriebswellen (18L, 18R) zu verteilen;
**dadurch gekennzeichnet, dass**
das Differential (16) mit einem schräg verzahnten Triebrad (54) verbunden ist, das mit einem schräg verzahnten Ritzel (52) des Getriebeausgangs in Eingriff steht, wobei eine Druckkammanordnung (62) durch die Schrägverzahnung entstehende Axialkräfte aufnimmt.

2. Antriebsstrang nach Anspruch 1, **dadurch gekennzeichnet, dass** das Ritzel (52) an einer Zwischenwelle (34) festgelegt ist, die parallel zu der Getriebeeingangswelle (22) gelagert ist.

3. Antriebsstrang nach Anspruch 2, **dadurch gekennzeichnet, dass** das Ritzel (52) in axialer Richtung zwischen einem ersten Zahnrad (40), das der ersten Gangstufe (G1) zugeordnet ist, und einem zweiten Zahnrad (42) angeordnet ist, das der zweiten Gangstufe (G2) zugeordnet ist.

4. Antriebsstrang nach einem der Ansprüche 1 bis 3, **dadurch gekennzeichnet, dass** ein erstes Zahnrad (40), das der ersten Gangstufe (G1) zugeordnet ist, und/oder dass ein zweites Zahnrad (42), das der zweiten Gangstufe (G2) zugeordnet ist, jeweils als drehbar an einer Zwischenwelle (34) gelagertes Losrad (40, 42) ausgebildet sind.

5. Antriebsstrang nach Anspruch 3 oder 4, **dadurch gekennzeichnet, dass** das erste Zahnrad (40) mittels einer ersten Kupplung (44) mit der Zwischenwelle (34) verbindbar ist, und/oder dass das zweite Zahnrad (42) mittels einer zweiten Kupplung (48) mit der Zwischenwelle (34) verbindbar ist.

6. Antriebsstrang nach einem der Ansprüche 3 bis 5, **dadurch gekennzeichnet, dass** das erste Zahnrad (40) mit einem ersten Gegenzahnrad (28) in Eingriff steht, das an der Getriebeeingangswelle (22) gelagert ist, und/oder dass das zweite Zahnrad (42) mit einem zweiten Gegenzahnrad (30) in Eingriff steht, das an der Getriebeeingangswelle (22) gelagert ist.

7. Antriebsstrang nach einem der Ansprüche 1 bis 6 oder nach dem Oberbegriff des Anspruchs 1, **dadurch gekennzeichnet, dass** die Getriebeeingangswelle (22) oder eine Maschinenwelle (20) der elektrischen Maschine (12) als Hohlwelle (22; 20'; 22") ausgebildet ist, wobei die andere Welle als Innenwelle (20; 22'; 20") ausgebildet ist, die in die Hohlwelle ragt und über einen Verzahnungsabschnitt (32) mit der Hohlwelle verbunden ist.

8. Antriebsstrang nach Anspruch 7, **dadurch gekennzeichnet, dass** der Verzahnungsabschnitt (32) von Radiallagern (24, 26) zum drehbaren Lagern der Getriebeeingangswelle (22) und/oder der Maschinenwelle (20) axial beabstandet ist.

9. Antriebsstrang nach einem der Ansprüche 1 bis 8, oder nach dem Oberbegriff des Anspruchs 1, **dadurch gekennzeichnet, dass** die zwei Gangstufen (G1, G2) zwischen der Getriebeeingangswelle (22) und einer Zwischenwelle (34) eingerichtet sind, an der ein Ritzel (52) des Getriebeausgangs festgelegt ist, wobei zwischen der Zwischenwelle (34) und einem Gehäuse (25) eine Parksperrenanordnung (56) angeordnet ist.

10. Antriebsstrang nach einem der Ansprüche 1 bis 9, **dadurch gekennzeichnet, dass** die Gangstufen (G1, G2) jeweils durch schräg verzahnte Radsätze (28/40, 30/42) gebildet sind, wobei die Schrägungsrichtung der Radsätze (28/40, 30/42) so gewählt ist, dass die hierdurch entstehenden Axialkräfte entgegengesetzt zu jeweiligen Betätigungsrichtungen (46, 50) von Kupplungen (44, 48) sind, mittels derer die Radsätze (28/40, 30/42) zur Leistungsübertragung geschaltet werden können.

## Claims

1. Drive train (10) for a motor vehicle, having
- an electric machine (12) for providing motive power;
- a transmission arrangement (14), which has a transmission input shaft (22) and a first and a second gear stage (G1, G2), wherein the transmission input shaft (22) is connected to the electric machine (12);
- a differential (16), which is connected to an output of the transmission and is set up to distribute motive power to two drive shafts (18L, 18R);
**characterized in that**
the differential (16) is connected to a helically toothed driving gear (54), which is in engagement with a helically toothed pinion (52) of the transmission output, wherein a pressure pad arrangement (62) absorbs axial forces arising from the helical toothing.

2. Drive train according to Claim 1, **characterized in that** the pinion (52) is fixed on an intermediate shaft (34), which is mounted parallel to the transmission input shaft (22).

3. Drive train according to Claim 2, **characterized in that** the pinion (52) is arranged between a first gearwheel (40), which is assigned to the first gear stage (G1), and a second gearwheel (42), which is assigned to the second gear stage (G2), in the axial direction.

4. Drive train according to one of Claims 1 to 3, **characterized in that** a first gearwheel (40), which is assigned to the first gear stage (G1), and/or **in that** a second gearwheel (42), which is assigned to the second gear stage (G2), are each designed as free gears (40, 42) rotatably mounted on an intermediate shaft (34).

5. Drive train according to Claim 3 or 4, **characterized in that** the first gearwheel (40) can be connected to the intermediate shaft (34) by means of a first clutch (44), and/or **in that** the second gearwheel (42) can be connected to the intermediate shaft (34) by means of a second clutch (48).

6. Drive train according to one of Claims 3 to 5, **characterized in that** the first gear-wheel (40) is in engagement with a first mating gearwheel (28), which is mounted on the transmission input shaft (22), and/or **in that** the second gearwheel (42) is in engagement with a second mating gearwheel (30), which is mounted on the transmission input shaft (22).

7. Drive train according to one of Claims 1 to 6 or according to the precharacterizing clause of Claim 1, **characterized in that** the transmission input shaft (22) or a machine shaft (20) of the electric machine (12) is designed as a hollow shaft (22; 20'; 22"), with the other shaft being designed as an inner shaft (20; 22'; 20"), which projects into the hollow shaft and is connected to the hollow shaft by a toothed section (32).

8. Drive train according to Claim 7, **characterized in that** the toothed section (32) is spaced apart axially from radial bearings (24, 26) for the rotatable mounting of the transmission input shaft (22) and/or of the machine shaft (20).

9. Drive train according to one of Claims 1 to 8 or according to the precharacterizing clause of Claim 1, **characterized in that** the two gear stages (G1, G2) are set up between the transmission input shaft (22) and an intermediate shaft (34), on which a pinion (52) of the transmission output is fixed, and a parking lock arrangement (56) is arranged between the intermediate shaft (34) and a housing (25).

10. Drive train according to one of Claims 1 to 9, **characterized in that** the gear stages (G1, G2) are each formed by helically toothed gearsets (28/40, 30/42), wherein the direction of the helix of the gearsets (28/40, 30/42) is chosen in such a way that the axial forces that arise therefrom are opposed to respective directions of actuation (46, 50) of clutches (44, 48), by means of which the gearsets (28/40, 30/42) can be selected for power transmission.

## Revendications

1. Chaîne de transmission (10) d'un véhicule automobile, comprenant
- un moteur électrique (12) pour fournir une puissance d'entraînement ;
- un agencement de transmission (14) qui présente un arbre d'entrée de transmission (22) et un premier et un deuxième rapport de vitesse (G1, G2), l'arbre d'entrée de transmission (22) étant connecté au moteur électrique (12) ;
- un différentiel (16) qui est connecté à une sortie de la transmission et qui est prévu pour distribuer la puissance d'entraînement à deux arbres d'entraînement (18L, 18R) ;
**caractérisée en ce que**
le différentiel (16) est connecté à une roue motrice à denture oblique (54), laquelle est en prise avec un pignon à denture oblique (52) de la sortie de transmission, un agencement d'engrènement par pression (62) recevant les forces axiales produites par la denture oblique.

2. Chaîne de transmission selon la revendication 1, **caractérisée en ce que** le pignon (52) est fixé à un arbre intermédiaire (34) qui est supporté parallèlement à l'arbre d'entrée de transmission (22).

3. Chaîne de transmission selon la revendication 2, **caractérisée en ce que** le pignon (52) est disposé dans la direction axiale entre une première roue dentée (40) qui est associée au premier rapport de vitesse (G1) et une deuxième roue dentée (42) qui est associée au deuxième rapport de vitesse (G2).

4. Chaîne de transmission selon l'une quelconque des revendications 1 à 3, **caractérisée en ce qu'**une première roue dentée (40) qui est associée au premier rapport de vitesse (G1) et/ou **en ce qu'**une deuxième roue dentée (42) qui est associée au deuxième rapport de vitesse (G2) sont à chaque fois réalisées sous forme de pignon fou (40, 42) monté de manière rotative sur un arbre intermédiaire (34).

5. Chaîne de transmission selon la revendication 3 ou 4, **caractérisée en ce que** la première roue dentée (40) peut être connectée au moyen d'un premier embrayage (44) à l'arbre intermédiaire (34), et/ou **en ce que** la deuxième roue dentée (42) peut être connectée au moyen d'un deuxième embrayage (48) à l'arbre intermédiaire (34).

6. Chaîne de transmission selon l'une quelconque des revendications 3 à 5, **caractérisée en ce que** la première roue dentée (40) est en prise avec une première roue dentée conjuguée (28) qui est montée sur l'arbre d'entrée de transmission (22), et/ou **en ce que** la deuxième roue dentée (42) est en prise avec une deuxième roue dentée conjuguée (30) qui est montée sur l'arbre d'entrée de transmission (22).

7. Chaîne de transmission selon l'une quelconque des revendications 1 à 6, où selon le préambule de la revendication 1, **caractérisée en ce que** l'arbre d'entrée de transmission (22) ou un arbre de moteur (20) du moteur électrique (12) est réalisé sous forme d'arbre creux (22 ; 20' ; 22"), l'autre arbre étant réalisé sous forme d'arbre interne (20 ; 22' ; 20") qui pénètre dans l'arbre creux et qui est connecté à l'arbre creux par le biais d'une section dentée (32).

8. Chaîne de transmission selon la revendication 7, **caractérisée en ce que** la section dentée (32) est espacée axialement de paliers radiaux (24, 26) pour le support rotatif de l'arbre d'entrée de transmission (22) et/ou de l'arbre de moteur (20).

9. Chaîne de transmission selon l'une quelconque des revendications 1 à 8 ou selon le préambule de la revendication 1, **caractérisée en ce que** les deux rapports de vitesse (G1, G2) sont disposés entre l'arbre d'entrée de transmission (22) et un arbre intermédiaire (34) sur lequel est fixé un pignon (52) de la sortie de transmission, un agencement de verrouillage de stationnement (56) étant disposé entre l'arbre intermédiaire (34) et un boîtier (25).

10. Chaîne de transmission selon l'une quelconque des revendications 1 à 9, **caractérisée en ce que** les rapports de vitesse (G1, G2) sont formés à chaque fois par des jeux de roues à dentures obliques (28/40, 30/42), le sens d'oblicité des jeux de roues (28/40, 30/42) étant choisi de telle sorte que les forces axiales se produisant de ce fait soient opposées aux sens d'actionnement respectifs (46, 50) d'embrayages (44, 48) au moyen desquels les jeux de roues (28/40, 30/42) peuvent être commutés en vue du transfert de puissance.
